# EUROPEAN PATENT APPLICATION

(11) **EP 1 589 447 A1**
(43) Date of publication of application: **26.10.2005**
(21) Application number: 03780981.1
(22) Date of filing: 22.12.2003
(51) Int. Cl.: G06F 17/60

(54) **REPAIR PARTS PRICE DECISION MANAGEMENT SYSTEM**

(30) Priority: 30.01.2003 JP 2003022566
(71) Applicant: Honda Motor Co., Ltd., Minato-ku, Tokyo 107-8556 (JP)
(72) Inventor: OGASAWARA, Yuuichi, c/o HONDA MOTOR CO., LTD., Tokyo 107-8556 (JP); SHINOZAKI, Keiichi, c/o HONDA MOTOR CO., LTD., Tokyo 107-8556 (JP)
(74) Representative: Donné, Eddy
(86) International application number: PCT/JP2003/016456
(87) International publication number: WO 2004/068380

(57) **Abstract**

This invention make not only makes it possible do away with discrepancies in the set prices of repair parts, but also makes it possible to reduce the time for completely setting the selling prices for the repair parts, and makes it possible to simply set the prices for repair parts even for a new person in charge.

A price-setting-management apparatus for repair parts 20 registers repair parts for which prices have been set in the parts DB (database) 40 as real-registration data according to the contents of an instruction from a terminal 10 that selects price-table price setting, similar-part price setting or cost-information price setting, registers repair parts for which the price has not been set in the price-setting-method-log-management DB (database) 50 as temporary data, and when repair parts that were not determined to have a profit are evaluated and set, further designates the temporary-registration data as real-registration data.

## Description

### DETAILED DESCRIPTION OF THE INVENTION

### Field of the Invention:

This invention relates to a price-setting management system for repair parts that performs overall management of the prices setting for repair parts of a new vehicle, including general-purpose parts for 4-wheel and two-wheel vehicles.

### Description of the Related Art:

Repair parts for an automobile, such as brake pads, air filter, and wiper blades that are to be put on the market are determined by the design drawings when a new vehicle is developed. In the case of an automobile, even for the same car type, a plurality of sales models are set according to MTOC (Model, Type, Option, Collar) by combining a plurality of options. Also, specifications are different for domestic models and overseas models, and the repair parts are set for combinations of these specifications. Incidentally, in the case of repair parts for an automobile, 7,000 sales accounts are set for each car type. Here, a sales account is the repair part number that comprises a numbers and letters and that is listed on the parts list (repair-parts list). These repair parts must be placed in inventory before the new vehicle is sold on the market. This is in order to be able to quickly meet the needs of the end user.

Also, the prices of each of the repair parts for an automobile are set when new models appear, and they are listed on the parts list. In this case, at the time when put on the market, it is necessary to set prices for all 7,000 sales accounts for each vehicle type. Moreover, when the design is set for a new model, which parts and in which form the repair parts will be sold is set. In this case, after determining where the set repair parts will be procured from, and how the variations in specifications will be handled, that set information is also registered in the sales account database. Furthermore, data such as information regarding price negotiations with the set provider and manufacturing costs for the automobile are collected. Also, specifications for packaging the parts are set, and price negotiations with the provider and prices are set.

After all of the cost information has been gathered, setting the selling prices for the repair parts begins. In this case, first, temporary selling prices are set by following the steps 1 to 5 below.
1. Search for similar parts (compare with the price table).
2. Check the drawings.
3. Compare with the market prices (prices of competitive manufactures).
4. Check the cost information (original unit price).
5. Create a price-setting list.

Finally, a meeting is held to evaluate the prices for the parts based on the temporary price-setting list, and after the final prices are set, they are registered in the sales-account database. However, in this kind of method for setting the prices of repair parts, the flow up until the file price for a repair part is set is not managed as a whole, and since there is no uniformity among the respective persons in charge, there are problems such as discrepancies that occur in the set prices for the repair parts, and it takes time until the selling prices for the repair parts are completely set. Also, since the information source is wide ranged, there is a problem in that it is difficult for a new person in charge to understand.

Incidentally, in Japanese patent Publication No. 2000-007790, an apparatus that supports price setting for a transaction according to a request from a client is proposed, and it comprises: ID information for the transaction; an external-memory apparatus that stores product-quality information that indicates the product quality of the transaction; a communications interface that receives product-quality-judgment information for determining the product quality of the transaction; a CPU that reads the product-quality information that matches the received ID information and product-quality information from the external-memory apparatus; and a communications interface that sends the read product-quality information to the client.

In this way, in Japanese patent Publication No. 2000-007790 described above, by supporting the price setting for a transaction according to a request from the client, the seller is able to set a proper price for the transaction. However, the apparatus disclosed in Japanese patent Publication No. 2000-007790 is effective when the number of transactions is small, however, as described above, in the case where it is necessary to set prices for all 7,000 sales accounts for one car model, it is unable to handle it, and there are problems in that there is a possibility of discrepancies in the prices set for the repair parts, it takes time to completely set the selling prices for the repair parts, and since the information source is very wide ranged, it is difficult for a new person in charge to understand.

Taking this kind of situation into consideration, the object of this invention is to provide a price-setting-management system that does away with discrepancies in the set prices for the repair parts, makes it possible to reduce the time for completely setting the selling prices for the repair parts, and makes it possible for a new person in charge to easily set the prices for the repair parts.

### DISCLOSURE OF INVENTION

The price-setting-management system for repair parts of this invention comprises: a repair-parts-price-setting-management apparatus having the function of managing price setting for repair parts based price-table prices, similar-part prices, and cost-information prices; a price-setting database in which a price table having the prices of repair parts from the part list, factory procurement information and cost information are registered; a parts database in which sales account data that indicates the repair parts, and real-registration data are registered; a price-setting-method-log-management database in which temporary-registration data is registered; and a plurality of terminals that are connected to the repair-parts-price-setting-management apparatus online and have the function of giving instructions for inputting prices of the repair parts from the parts list, factory-procurement information and cost information, and selecting price-table price setting, similar-part price setting or cost-information price setting, and the function of viewing the prices of repair parts that are set by price-table prices, similar-part prices or cost-information prices; and where according to the contents of a selection instruction from a terminal, the repair-parts-price-setting-management apparatus registers repair parts for which the prices have been set in the parts database as real-registration data, and registers repair parts for which the prices have not been set in the price-setting-method-log-management database as temporary-registration data.

Moreover, the repair-parts-price-setting-management apparatus further comprises: a registration-information-receiving unit that has the function of registering the prices of repair parts from the parts list, factory procurement information, and cost information, which are input from a terminal, in the price-setting database; a search-information-receiving unit that has the function of searching the various kinds of information registered in the price-setting database and parts database based on the contents input from a terminal; a price-table-price-setting unit that has the function of searching for the prices of repair parts from the price table registered in the price-setting database based on the part numbers of repair parts and attributes of repair parts when an instruction for price-table price setting is output from a terminal and further when part numbers of the repair parts and attributes of the repair parts are input, performing profit-loss calculation for each of the repair parts and displaying the calculation results at the terminal; a similar-part-price-setting unit that has the function of searching for the prices of repair parts from sales accounts registered in the parts database based on similar part numbers of repair parts and attributes of repair parts when an instruction for similar-part price setting is output from a terminal and further when similar part numbers of the repair parts and attributes of the repair parts are input, performing profit-loss calculation for each of the repair parts and displaying the calculation results at the terminal; a cost-information-price-setting unit that has the function of searching for the prices of repair parts from the cost information registered in the price-setting database based on part numbers of repair parts and attributes of repair parts when an instruction for cost-information price setting is output from a terminal and further when part numbers of the repair parts and attributes of the repair parts are input, performing profit-loss calculation for each of the repair parts and displaying the calculation results at the terminal; a real-registration unit that has the function of registering repair parts, which are determined by the profit-loss calculation by the price-table-price-setting unit, similar-part-price-setting unit and cost-information-price-setting unit to have profit, in the real-registration database as real-registration data; and a temporary-registration unit that has the function of registering repair parts, which are determined by the profit-loss calculation by the price-table-price-setting unit, similar-part-price-setting unit and cost-information-price-setting unit to not have profit, in the price-setting-method-log-management database as temporary-registration data.

Also, the real-registration unit is able to designate temporary-registration data as real-registration data after repair parts that were determined not to have profit are evaluated and set.

The method of repair-parts-price-setting-management for repair parts of this invention comprises: a process whereby a repair-parts-price-setting-management apparatus manages price setting of repair parts based on price-table prices, similar-part prices and cost-information prices; a process of registering a price table having prices of repair parts from the parts list, factory procurement information and cost information in a price-setting database; a process of registering sales account data indicating the repair parts, and real-registration data in a parts database; a process of registering temporary-registration data in a price-setting-method-log-management database; a process whereby a plurality of terminals that are connected to the repair-parts-price-setting-management apparatus give instructions from for inputting prices of the repair parts from the parts list, factory-procurement information and cost information, and selecting price-table price setting, similar-part price setting or cost-information price setting, and view the prices of repair parts that are set by price-table prices, similar-part prices or cost-information prices; and where according to the contents of a selection instruction from a terminal, the repair-parts-price-setting-management apparatus registers repair parts for which the prices have been set in the parts database as real-registration data, and registers repair parts for which the prices have not been set in the price-setting-method-log-management database as temporary-registration data.

Moreover, the repair-parts-price-setting-management method further comprises: a process whereby an registration-information-receiving unit registers the prices of repair parts from the parts list, factory procurement information, and cost information, which are input from a terminal, in the price-setting database; a process whereby a search-information-receiving unit searches the various kinds of information registered in the price-setting database and parts database based on the contents input from a terminal; a process whereby a price-table-price-setting unit searches for the prices of repair parts from the price table registered in the price-setting database based on the part numbers of repair parts and attributes of repair parts when an instruction for price-table price setting is output from a terminal and further when part numbers of the repair parts and attributes of the repair parts are input, performs profit-loss calculation for each of the repair parts and displays the calculation results at the terminal; a process whereby a similar-part-price-setting unit searches for the prices of repair parts from sales accounts registered in the parts database based on similar part numbers of repair parts and attributes of repair parts when an instruction for similar-part price setting is output from a terminal and further when similar part numbers of the repair parts and attributes of the repair parts are input, performs profit-loss calculation for each of the repair parts and displays the calculation results at the terminal; a process whereby a cost-information-price-setting unit searches for the prices of repair parts from the cost information registered in the price-setting database based on part numbers of repair parts and attributes of repair parts when an instruction for cost-information price setting is output from a terminal and further when part numbers of the repair parts and attributes of the repair parts are input, performs profit-loss calculation for each of the repair parts and displays the calculation results at the terminal; a process whereby a real-registration unit registers repair parts, which are determined by the profit-loss calculation by the price-table-price-setting unit, similar-part-price-setting unit and cost-information-priee-setting unit to have profit, in the real-registration database as real-registration data; and a process where by a temporary-registration unit registers repair parts, which are determined by the profit-loss calculation by the price-table-price-setting unit, similar-part-price-setting unit and cost-information-price-setting unit to not have profit, in the price-setting-method-log-management database as temporary-registration data.

Also, the repair-parts-price-setting-management method can have a process whereby the real-registration unit designates temporary-registration data as real-registration data after repair parts that were determined not to have profit are evaluated and set.

### BRIEF DESCRIPTION OF THE DRAWINGS

Fig. 1 is a drawing showing an embodiment of the price-setting-management system for repair parts of this invention.
Fig. 2 is a flowchart for explaining the method of managing price setting for repair parts by the price-setting-management system for repair parts shown in Fig. 1.
Fig. 3 is a flowchart for explaining the method of managing price setting for repair parts by the price-setting-management system for repair parts shown in Fig. 1.
Fig. 4 is a flowchart for explaining the method of managing price setting for repair parts by the price-setting-management system for repair parts shown in Fig. 1.

### DESCRIPTION OF THE PREFERRED EMBODIMENT

The preferred embodiment of the invention will be explained below.

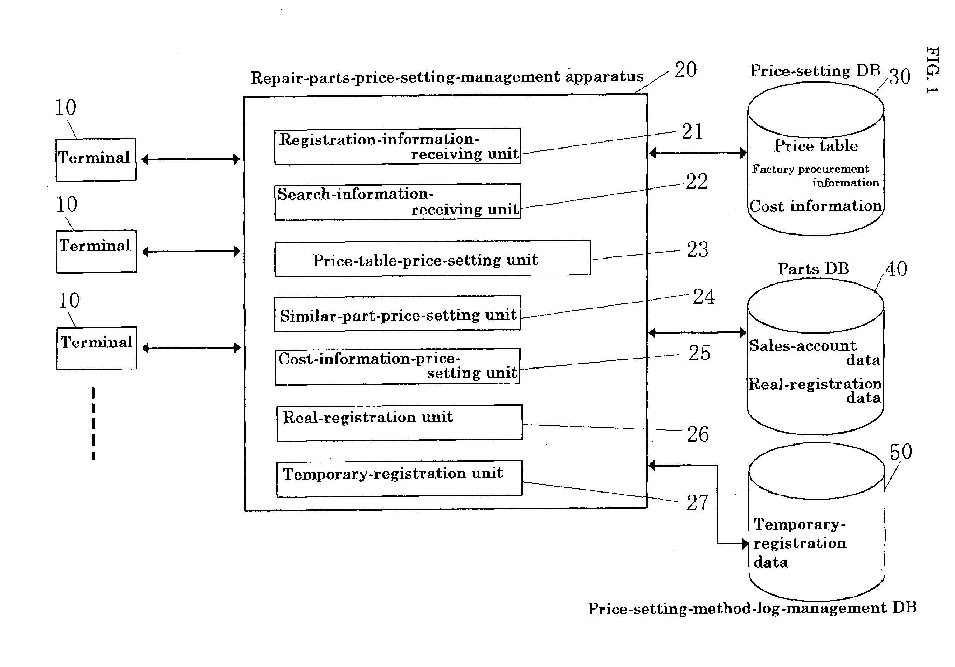

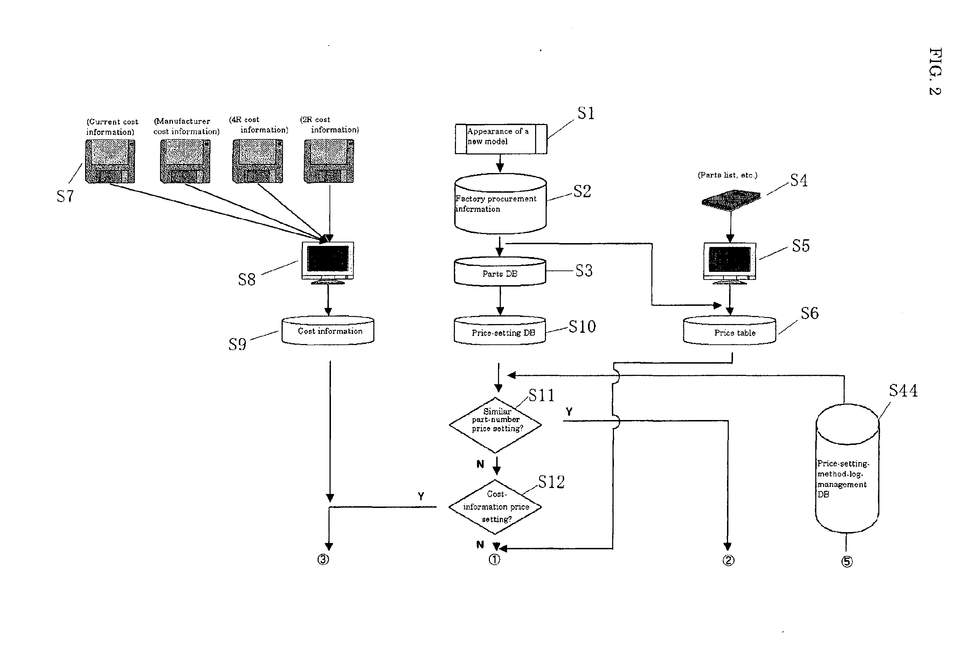

Fig. 1 is a drawing showing an embodiment of the price-setting-management system for repair parts of this invention, and Fig. 2 to Fig. 4 are flowcharts for explaining the method of managing price setting for repair parts by the price-setting-management system for repair parts shown in Fig. 1.

The price-setting-management system for repair parts shown in Fig. 1 comprises a plurality of terminals 10, a repair-parts-price-setting-management apparatus 20, a price-setting DB (database) 30, parts DB (database) 40, and price-setting-method-log-management DB (database) 50, and all of these are connected online.

The plurality of terminals 10 have the function of; inputting information that will be described later such as factory procurement information, cost information, and prices of repair parts on the parts list; instructing the selection of settings that will be described later such as price-table price settings, similar-part price settings, and cost-information price settings; and viewing the prices for the repair parts that were set according to either the price-table price settings, similar-part price settings, or cost-information price settings that will be described later.

The repair-parts-price-setting-management apparatus 20 has the function of managing the price setting of repair parts based on the price table prices, similar-part prices, and cost-information prices; and it comprises: a registration-information-receiving unit 21, search-information-receiving unit 22, price-table-price-setting unit 23, similar-part-price-setting unit 24, cost-information-price-setting unit 25, real-registration unit 26 and temporary-registration unit 27.

The registration-information-receiving unit 21 has the function of registering information that will be described later and that is input from any of the terminals 10 such as factory procurement information, cost information, and prices of repair parts on the parts list in the price-setting DB (database) 30.

The search-information-receiving unit 22 has the function of searching for all kinds of information that is registered in the price-setting DB (database) 30 or parts DB (database) 40 based on the input contents from a terminal 10.

When an instruction for price setting according to the price table is output from a terminal 10, and when the part numbers of repair parts, and necessary attribute items of the repair parts (for example, dimensions, amount of exhaust, color, etc.) are input, the price-table-price-setting unit 23 has the function of searching for the prices of repair parts from the price table registered in the price-setting DB (database) 30 based on the repair-part part number and repair part attributes, then calculates the profits and losses for each of the repair parts and displays the calculation results at the terminal 10.

When an instruction for price setting according to similar parts is output from a terminal 10, and when the part numbers of the similar repair parts, and necessary attribute items of the repair parts (for example, dimensions, amount of exhaust, color, etc.) are input, the similar-part-price-setting unit 24 has the function of searching for the prices of repair parts from the sales accounts registered in the parts DB (database) 40 based on the part number of the similar parts and repair part attributes, then calculates the profits and losses for each of the repair parts and displays the calculation results at the terminal 10.

When an instruction for price setting according to cost information is output from a terminal 10, and when the part numbers of the repair parts, and necessary attribute items of the repair parts (for example, dimensions, amount of exhaust, color, etc.) are input, the cost-information-price-setting unit 25 has the function of searching for the prices of repair parts from the cost information registered in the price-setting DB (database) 30 based on the part number of the repair parts and repair part attributes, then calculates the profits and losses for each of the repair parts and displays the calculation results at the terminal 10.

The real-registration unit 26 has the function of registering repairs parts, which were determined to be profitable by the profit-loss calculations by the price-table-price-setting unit 23, similar-part-price-setting unit 24 and cost-information-price-setting unit 25, in the parts DB (database) 40 as real-registration data.

The temporary-registration unit 27 has the function of registering repairs parts, which were not determined to be profitable by the profit-loss calculations by the price-table-price-setting unit 23, similar-part-price-setting unit 24 and cost-information-price-setting unit 25, or whose appropriateness was not evaluated as being OK by the 'price evaluation committee', in the price-setting-method-log-management DB (database) 50 as temporary-registration data.

The price table, factory procurement information, and cost information are registered in the price setting DB (database) 30. Sales account data indicating the repair parts for each car type, and real-registration data from the real-registration unit 26 are registered in the parts DB (database) 40. Temporary-registration data from the temporary-registration unit 27 is registered in the price-setting-method-log-management DB (database) 50.

Next, the method of managing price setting for repair parts by this kind of price-setting-management system for repair parts is explained.

First, as shown in Fig. 2, a new model of an automobile is started (step S1), and after factory procurement information is obtained from any one of the terminals 10 described above (step S2), the data from the factory procurement information related to the sales account of repair parts is registered in the parts DB (database) 40 by the registration-information-receiving unit 21 (step S3). At this time, together with the prices of repair parts that are to be put on the market based on the design drawings of the new model listed in the parts list (repair parts list), the prices of the repair parts in the parts list input by the terminals 10 are registered in the price table in the price-setting DB (database) 30 (steps S4 to S6). Here, prices for each of the repair parts are registered in the price table for each sales account, which is the part number of the repair part that comprises numbers and letters.

At this time, when information such as price negotiations with the procurement source or unit cost for each manufacturing process of the automobile, or information in which the packaging specifications for the repair parts are set, and information in which the price negotiations with that procurement source and the prices are set is input from a terminal 10, the registration-information-receiving unit 21 registers it in the price-setting DB (database) 30 as cost information (steps S7 to S10).

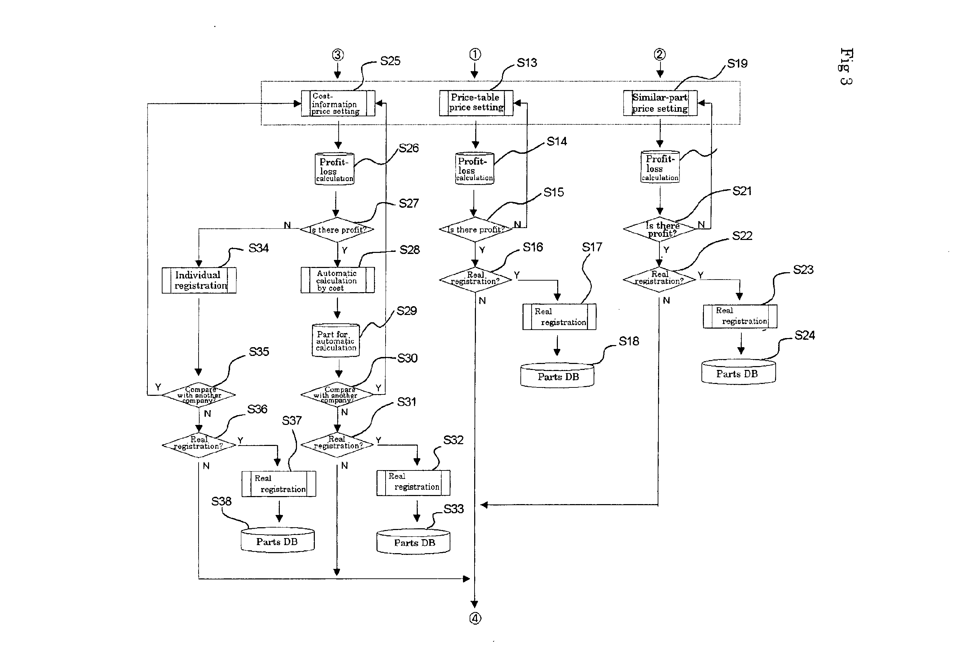

Next, the selling price for the repair parts is set. In this case, the selection items, price-table price setting, similar-part price setting, and cost-information price setting are displayed at the terminals 10 described above, and when the item price-table price setting is selected for example, processing goes to the price-table price setting process shown in Fig. 3 (steps S11 to S13).

Here, a list of part numbers that require price setting are displayed at the terminal 10 described above, and when a part number is selected, the display moves to the 'Price-table Price Setting' screen. Here, the part numbers are the main numbers of the numbers for the repair parts listed in the parts list, and comprises numbers and letters. The necessary items (for example, dimensions, amount of exhaust, color, etc.), which are attributes of the repair parts, are entered on the screen, and when the [Enter] key is pressed, the prices of the repair parts are searched for from the price table that is registered in the price-setting DB (database) 30 based on the part numbers and attributes of the repair parts, and after the profits and losses are calculated for each repair part, the calculation results are display at the terminal 10 (step S14). When it is determined from the calculation results for example that there were profits for a repair part, and when it is further determined to perform real-registration, real-registration is performed (step S15 to S17). In this case, the real-registration unit 26 registers the sales account for the repair part that was designated for real-registration in the parts DB (database) 40 (step S18). However, in step S15, when it is determined that there were no profits for a repair part, the process returns to step S13, and the necessary items (for example, dimensions, amount of exhaust, color, etc.) are entered again.

On the other hand, when there are no items in the price table described above, by selecting the 'similar-part price setting' in step S11 in Fig. 2, the process moves to the similar-part price setting process shown in Fig. 3 (step S19). Here, the part numbers that require price setting are displayed in a list at the terminals 10 described above, and similarly, when part numbers are selected, the screen changes to the 'similar-part price setting' screen. The necessary attribute items for the repair parts (for example, dimensions, amount of exhaust, color, etc.) are entered on this screen, and when the [Enter] key is pressed, the prices of the repair parts are searched for from the sales account registered in the parts DB (database) 40 based on the similar part numbers and attributes of the repair parts, and after performing profit-loss calculation for each repair part, the calculation results are displayed at the terminal 10 (step S20). When it is determined from the calculation results that there are profits, and when it is further determined to perform real-registration, real-registration is performed (steps S21 to S23). In this case, the real-registration unit 26 registers the sales account for the repair part that was designated for real-registration in the parts DB (database) 40 (step S24). However, in step S21, when it is determined that there were no profits for a repair part, the process returns to step S19, and the necessary items (for example, dimensions, amount of exhaust, color, etc.) are entered again.

On the other hand, when there are no items for similar-part price setting described above, by selecting the 'cost-information price setting' in step S12 in Fig. 2, the process moves to the cost-information price setting process shown in Fig. 3 (step S25). Here, the part numbers that require price setting are displayed in a list at a terminal 10 described above, and similarly, when part numbers are selected, the screen changes to the 'cost-information price setting' screen. The necessary attribute items for the repair parts (for example, dimensions, amount of exhaust, color, etc.) are entered on this screen, and when the [Enter] key is pressed, the prices of the repair parts are searched for from the cost information registered in the price-setting DB (database) 30 based on the part numbers and attributes of the repair parts, and profit-loss calculation is performed for each repair part (step S26).

Here, two kinds of setting are prepared for cost-information price setting. In other words, there is the case where it is determined that there are profits, there is the case where it is determined that there are no profits. First, when it is determined that there are profits (step S27), the calculation results are displayed according to automatic calculation based on the cost information (steps S28 and S29). From the calculation results, it is determined whether or not to compare with another company (step S30), and when it is determined that it is necessary to compare with another company, the process is repeated again from step S25.

However, when it is determined that comparison with another company is not necessary, and when it is further determined to perform real-registration, real-registration is performed (steps S30 to S32). In this case, the real-registration unit 26 registers the sales accounts of the repair parts for real registration in the parts DB (database) 40 as real-registration data (step S33).

On the other hand, in step S27 when it is determined that there are no profits, registration becomes individual registration (step 34). When performing this individual registration, it is possible to display a caution message. Here, together with performing the individual registration, it is determined whether or not to compare with another company (step S35), and when it is determined the it is necessary to perform comparison with another company, the process is performed again from again from step S25. However, when it is determined that comparison with another company is not necessary, and when it is further determined to perform real-registration, real-registration is performed (steps S35 to S37). In this case, the real-registration unit 26 registers the sales accounts of the repair parts for real registration in the parts DB (database) 40 as real-registration data (step S38).

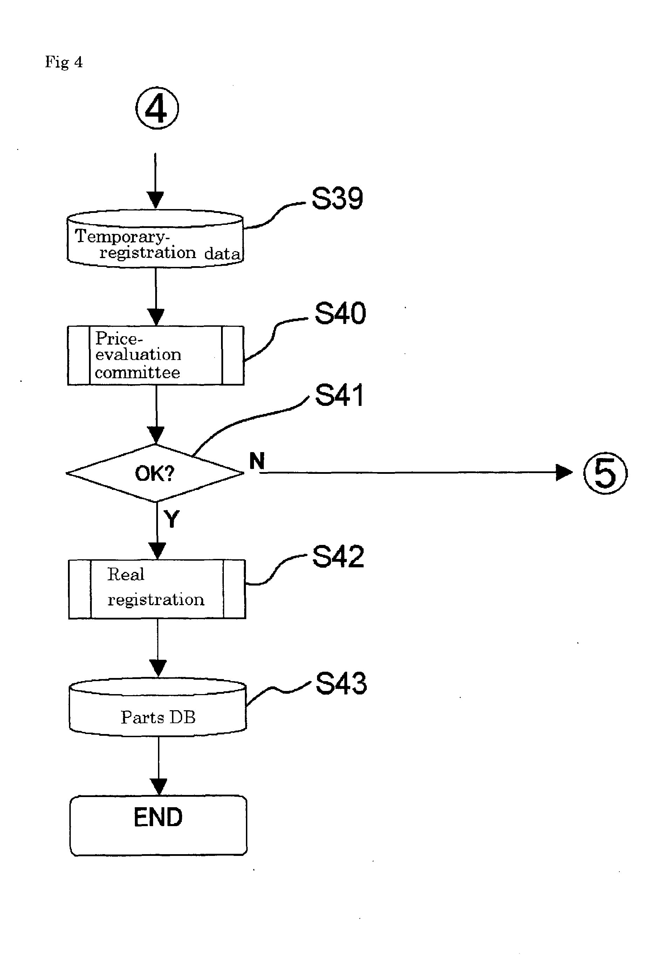

On the other hand, in step S16, step S22 or step S36, when it is not determined to perform real registration, when it is determined not to perform real information, as shown in Fig. 4, the temporary-registration unit 27 registers the price of the repair part as temporary-registration data in the price-setting-method-log-management DB (database) 50 (steps S39). When the 'price-evaluation committee' evaluates the appropriateness of prices of repair parts that were registered as temporary-registration data (step S41), and when evaluated as OK, the real-registration unit 26 registers the sales accounts of those repair parts as real-registration data in the parts DB (database) 40 (steps S42 and S43). However, when evaluated as not OK, the process returns to step S11 in Fig. 2, and price-table price setting, similar-part price setting or cost-information price setting described above is performed again. At this time, temporary-registration data that is not evaluated as OK is collected in the price-setting-method-log-management DB (database) 50 (step S44), and used as reference information the next time when setting prices.

In this way, in this embodiment, the price-setting-management apparatus for repair parts 20 registers repair parts for which prices have been set in the parts DB (database) 40 as real-registration data according to the contents of an instruction from a terminal 10 that selects price-table price setting, similar-part price setting or cost-information price setting, registers repair parts for which the price has not been set in the price-setting-method-log-management DB (database) 50 as temporary data, and when repair parts that were not determined to have a profit are evaluated and set, further designates the temporary-registration data as real-registration data.

In this way, the flow until the final prices for the repair parts are set is managed together as a whole, making it possible to maintain uniformity among the respective persons in charge; and not only is it possible to do away with discrepancies in the set prices of the repair parts, but it is also possible to reduce the time for completely setting the selling prices for the repair parts, and it is possible to simply set the prices for repair parts even for a new person in charge.

In this embodiment, the case of performing overall management for setting the prices of repair parts of a four-wheel new automobile was explained, however, the invention is not limited to this, and it is also possible to perform overall management for setting the prices of repair parts of a new vehicle that includes a two-wheel vehicle and also general-purpose parts.

### INDUSTRIAL APPLICABILITY

As described above, with the price-setting-management system for repair parts of this invention, according to the selection instruction for price-table price setting, similar-part price setting or cost-information price setting, the repair-parts-price-setting-management apparatus registers repair parts for which prices have been set in the parts database as real-registration data, and registers repair parts for which prices have not been set in the price-setting-method-log-management database as temporary data, so it is possible to do away with discrepancies in the set prices of the repair parts, and reduce the time for completely setting the selling prices for the repair parts, as well as it is possible to simply set the prices for repair parts even for a new person in charge.

## Claims

1. A price-setting-management system for repair parts comprising:
a repair-parts-price-setting-management apparatus having the function of managing price setting for repair parts based price-table prices, similar-part prices, and cost-information prices;
a price-setting database in which a price table having the prices of said repair parts from the part list, factory procurement information and cost information are registered;
a parts database in which sales account data that indicates said repair parts, and real-registration data are registered;
a price-setting-method-log-management database in which temporary-registration data is registered; and
a plurality of terminals that are connected to said repair-parts-price-setting-management apparatus online and have the function of giving instructions for inputting prices of said repair parts from said parts list, factory-procurement information and cost information, and selecting said price-table price setting, similar-part price setting or cost-information price setting, and the function of viewing the prices of said repair parts that are set by said price-table prices, similar-part prices or cost-information prices; and where
according to the contents of a selection instruction from said terminal, said repair-parts-price-setting-management apparatus registers said repair parts for which the prices have been set in said parts database as said real-registration data, and registers said repair parts for which the prices have not been set in said price-setting-method-log-management database as said temporary-registration data.

2. The price-setting-management system for repair parts of claim 1 wherein
said repair-parts-price-setting-management apparatus further comprises:
a registration-information-receiving unit that has the function of registering said prices of repair parts from the parts list, factory procurement information, and cost information, which are input from said terminal, in said price-setting database;
a search-information-receiving unit that has the function of searching the various kinds of information registered in said price-setting database and parts database based on the contents input from said terminal;
a price-table-price-setting unit that has the function of searching for the prices of said repair parts from the price table registered in said price-setting database based on the part numbers of said repair parts and attributes of said repair parts when an instruction for said price-table price setting is output from said terminal and further when part numbers of said repair parts and attributes of said repair parts are input, performing profit-loss calculation for each of said repair parts and displaying the calculation results at said terminal;
a similar-part-price-setting unit that has the function of searching for the prices of said repair parts from sales accounts registered in said parts database based on similar part numbers of said repair parts and attributes of said repair parts when an instruction for similar-part price setting is output from said terminal and further when similar part numbers of said repair parts and attributes of said repair parts are input, performing profit-loss calculation for each of said repair parts and displaying the calculation results at said terminal;
a cost-information-price-setting unit that has the function of searching for the prices of said repair parts from the cost information registered in said price-setting database based on part numbers of said repair parts and attributes of said repair parts when an instruction for cost-information price setting is output from said terminal and further when part numbers of said repair parts and attributes of said repair parts are input, performing profit-loss calculation for each of said repair parts and displaying the calculation results at said terminal;
a real-registration unit that has the function of registering said repair parts, which are determined by the profit-loss calculation by said price-table-price-setting unit, similar-part-price-setting unit and cost-information-price-setting unit to have profit, in said real-registration database as said real-registration data; and
a temporary-registration unit that has the function of registering said repair parts, which are determined by the profit-loss calculation by said price-table-price-setting unit, similar-part-price-setting unit and cost-information-price-setting unit to not have profit, in said price-setting-method-log-management database as said temporary-registration data.

3. The price-setting-management system for repair parts of claim 2 wherein
said real-registration unit is able to designate said temporary-registration data as said real-registration data after said repair parts that were determined not to have profit are evaluated and set.

4. A method of repair-parts-price-setting-management for repair parts comprising:
a process whereby a repair-parts-price-setting-management apparatus manages price setting of repair parts based on price-table prices, similar-part prices and cost-information prices;
a process of registering a price table having prices of repair parts from the parts list, factory procurement information and cost information in a price-setting database;
a process of registering sales account data indicating said repair parts, and real-registration data in a parts database;
a process of registering temporary-registration data in a price-setting-method-log-management database;
a process whereby a plurality of terminals that are connected online to the repair-parts-price-setting-management apparatus give instructions for inputting said prices of the repair parts from the parts list, factory-procurement information and cost information, and selecting said price-table price setting, similar-part price setting or cost-information price setting, and view the prices of said repair parts that are set by said price-table prices, similar-part prices or cost-information prices; and wherein
according to the contents of a selection instruction from a terminal, said repair-parts-price-setting-management apparatus registers said repair parts for which the prices have been set in said parts database as said real-registration data, and registers said repair parts for which the prices have not been set in said price-setting-method-log-management database as said temporary-registration data.

5. The method of repair-parts-price-setting-management for repair parts of claim 4 further comprising:
a process whereby an registration-information receiving unit registers said prices of repair parts from the parts list, factory procurement information, and cost information, which are input from said terminal, in said price-setting database;
a process whereby a search-information-receiving unit searches the various kinds of information registered in said price-setting database and parts database based on the contents input from said terminal;
a process whereby a price-table-price-setting unit searches for the prices of said repair parts from said price table registered in said price-setting database based on the part numbers of said repair parts and attributes of said repair parts when an instruction for said price-table price setting is output from said terminal and further when part numbers of said repair parts and attributes of said repair parts are input, performs profit-loss calculation for each of said repair parts and displays the calculation results at said terminal;
a process whereby a similar-part-price-setting unit searches for the prices of said repair parts from sales accounts registered in said parts database based on similar part numbers of said repair parts and attributes of said repair parts when an instruction for similar-part price setting is output from said terminal and further when similar part numbers of said repair parts and attributes of said repair parts are input, performs profit-loss calculation for each of said repair parts and displays the calculation results at said terminal;
a process whereby a cost-information-price-setting unit searches for the prices of said repair parts from the cost information registered in said price-setting database based on part numbers of said repair parts and attributes of said repair parts when an instruction for cost-information price setting is output from said terminal and further when part numbers of said repair parts and attributes of said repair parts are input, performs profit-loss calculation for each of said repair parts and displays the calculation results at said terminal;
a process whereby a real-registration unit registers said repair parts, which are determined by the profit-loss calculation by said price-table-price-setting unit, similar-part-price-setting unit and cost-information-price-setting unit to have profit, in said real-registration database as said real-registration data; and
a process where by a temporary-registration unit registers said repair parts, which are determined by the profit-loss calculation by said price-table-price-setting unit, similar-part-price-setting unit and cost-information-price-setting unit to not have profit, in said price-setting-method-log-management database as said temporary-registration data.

6. The repair-parts-price-setting-management method of claim 5 further comprising a process whereby
said real-registration unit designates said temporary-registration data as said real-registration data after said repair parts that were determined not to have profit are evaluated and set.
